# EUROPÄISCHE PATENTANMELDUNG

(11) **EP 2 143 668 A1**
(43) Veröffentlichungstag der Anmeldung: **13.01.2010**
(21) Anmeldenummer: 08290677.7
(22) Anmeldetag: 09.07.2008
(51) Int. Cl.: B65G 13/11

(54) **Rollenbahn mit Profilschiene**

(71) Anmelder: Interroll Holding AG, 6592 Sant 'Antonino (CH)
(72) Erfinder: Séjourné, Jérome, 85530 La Bruffiere (FR); Reymond, Bertrand, 85170 Belleville Sur Vie (FR)
(74) Vertreter: Müller-Boré & Partner Patentanwälte

(57) **Zusammenfassung**

Die Erfindung betrifft eine Rollbahn zum Transport von Lagergütern mit einer einen Boden (11) und zwei gegenüber dem Boden (11) abgewinkelt verlaufende Seitenwände (12) aufweisenden Profilschiene (1), deren Seitenwände (12) so ausgebildet sind, dass sie unter dem Einfluss einer in Richtung des Bodens (11) gerichteten Kraft dazu neigen, aufeinander zu zu schwenken, mehreren Rollkörpern (2), die über Drehachsen (3) drehbar in Lageröffnungen (4) der Seitenwände (12) gelagert sind, und Mitteln (13) zur Lagesicherung der Drehachsen (3) in den Lageröffnungen (4), wobei die Lageröffnungen (4) als sich vom freien Ende der Seitenwände (12) in Richtung des Bodens (12) erstreckende Einsenkungen ausgebildet sind.

Einen weiteren Gegenstand der Erfindung bildet ein Verfahren zur Herstellung einer Rollbahn zum Transport von Lagergütern mit einer einen Boden (11) und zwei gegenüber dem Boden (11) abgewinkelt verlaufende Seitenwände (12) aufweisenden Profilschiene (1), deren Seitenwände (12) so ausgebildet sind, dass sie unter dem Einfluss einer in Richtung des Bodens (11) gerichteten Kraft dazu neigen, aufeinander zu zu schwenken, mehreren Rollkörpern (2), die über Drehachsen (3) drehbar in Lageröffnungen (4) der Seitenwände (12) gelagert sind, und Mitteln (13) zur Lagesicherung der Drehachsen (3) in den Lageröffnungen (4), wobei die Rollkörper (2) gemeinsam mit den Drehachsen (3) im Wesentlichen in Richtung der Seitenwände (12) in die Lageröffnungen (4) eingesetzt werden.

## Beschreibung

Die Erfindung betrifft eine Rollbahn zum Transport von Lagergütern, mit einer einen Boden und zwei gegenüber dem Boden abgewinkelt verlaufenden Seitenwänden aufweisenden Profilschiene, deren Seitenwände so ausgebildet sind, dass sie unter dem Einfluss einer in Richtung des Bodens gerichteten Kraft dazu neigen, aufeinander zu zu schwenken, mehreren Rollkörpern, die über Drehachsen drehbar in Lageröffnungen der Seitenwände gelagert sind, und Mitteln zur Lagesicherung der Drehachsen in den Lageröffnungen. Einen weiteren Gegenstand der Erfindung bildet ein Verfahren zur Herstellung einer solchen Rollbahn.

Die Verwendung von Rollbahnen als Transport- und/oder Lagermittel ist in der Lager- und Kommissioniertechnik sowohl in Form von Einzelrollbahnen als auch als Bestandteil größerer Durchlaufregale weit verbreitet. Bekannte Rollbahnen bestehen üblicherweise aus einer kanalförmigen, blechgebogenen Profilschiene, an deren Seitenwänden mehrere in Längsrichtung der Profilschiene hintereinander angeordnete Rollkörper frei drehbar gelagert sind. Die zu transportierenden Lagergüter können von der Beschickungsseite her auf den Rollkörpern abgesetzt und aufgrund einer Neigung der Rollbahn entlang der Profilschienen unter dem Einfluss der Schwerkraft in Richtung der Entnahme- bzw. Kommissionierseite transportiert werden. Die Rollbahnen können in einer paarweisen Anordnung verwendet werden, so dass die eine Seite des zu transportierenden Lagerguts auf einer ersten und die andere Seite des Lagerguts auf einer zweiten Rollbahn liegt. Bei den Lagergütern handelt es sich zumeist um Stückgüter oder um standardisierte Paletten, Container, Stapelbehälter, Transportbehälter, Kartons, Einzelgebinde usw.

Viele Rollbahnen weisen eine starre Profilschiene mit einem Boden und zwei gegenüber dem Boden rechtwinklig abgewinkelt verlaufenden Seitenwänden auf, die mit den Lageröffnungen für die Drehachsen der Rollkörper versehen sind. Zur Lagesicherung der Drehachsen in ihrer Position an der Profilschiene werden oftmals zusätzliche Sicherungselemente, etwa Muttern, Halteclips, Bolzen usw. verwendet, wodurch sich eine viele Einzelteile erfordernde, insbesondere bei einer großen Anzahl von Rollkörpern aufwändig zu montierende Konstruktion ergibt.

Ferner sind Konstruktionen bekannt, bei denen die Seitenwände der Profilschienen zumindest abschnittsweise einen schräg in Richtung der Mitte der Profilschiene hin geneigten Verlauf aufweisen. Eine solche Konstruktion ist aus dem koreanischen Gebrauchsmuster 2002 15858 bekannt. Als Lageröffnungen dienen sich quer zu den Seitenwänden erstreckende Durchgangsbohrungen, in welche die Drehachsen in einer Richtung quer zu den Seitenwänden von der Seite her eingesteckt werden. Zur axialen Sicherung der Drehachsen sind die oberen, freien Enden der Seitenwände so geformt, dass durch eine Art mehrfache Abkantung eine axial hinter dem freien Ende der Drehachse liegende Anschlagfläche entsteht, die ein Hinausrutschen der Drehachse aus den Lageröffnungen blockiert.

Solche Rollbahnen kommen zwar ohne zusätzliche Sicherungselemente zur Lagesicherung der Drehachsen in den Halteöffnungen aus, weisen jedoch den Nachteil auf, dass aufgrund der sich quer zu den Seitenwänden erstreckenden, als Bohrungen ausgebildeten Lageröffnungen das Einsetzen der Drehachsen in die Lagerbohrungen vergleichsweise aufwendig ist. Zunächst müssen die Seitenwände auseinander gespreizt werden, so dass der Abstand zwischen den Seitenwänden ausreicht, um die Drehachse in den Raum zwischen den Seitenwänden einzuführen. Erst wenn der Abstand der Seitenwände und damit der Lageröffnungen größer als die Länge der Drehachse ist, kann der Rollkörper gemeinsam mit der Drehachse von oben her in Richtung des Bodens der Profilschiene in eine Stellung zwischen den beiden Lagerbohrungen verbracht werden. Die Drehachse ist in dieser Stellung fluchtend mit den sich quer durch die Seitenwände erstreckenden Lageröffnungen zu halten, wonach dann die Spreizung der Seitenwände wieder aufgehoben werden kann und die Enden der Drehachse in die Lageröffnung eintreten.

Aufgabe der Erfindung ist es ausgehend von einem solchen Stand der Technik, eine Rollbahn und ein Herstellungsverfahren für eine Rollbahn anzugeben, die sich durch eine einfache Montage der Rollkörper an der Profilschiene auszeichnen.

Diese Aufgabe wird durch die Gegenstände der unabhängigen Ansprüche gelöst. Vorteilhafte Ausführungsformen bilden Gegenstände der abhängigen Unteransprüche.

Ein erster Aspekt der Erfindung betrifft eine Rollbahn zum Transport von Lagergütern mit einer Profilschiene, welche einen Boden und zwei gegenüber dem Boden abgewinkelt verlaufende Seitenwände aufweist, wobei die Seitenwände so ausgebildet sind, dass sie unter dem Einfluss einer in Richtung des Bodens gerichteten Kraft dazu neigen, aufeinander zu zu schwenken, mehreren Rollkörpern, die über Drehachsen drehbar in Lageröffnungen der Seitenwände gelagert sind, und Mitteln zur Lagesicherung der Drehachsen in den Lageröffnungen, wobei die Halteöffnungen als sich vom freien Rand der Seitenwände in Richtung des Bodens erstreckende Einsenkungen ausgebildet sind.

Die sich vom freien Rand der Seitenwände in Richtung des Bodens erstreckenden Einsenkungen erlauben eine einfache Montage der mit den Drehachsen versehenen Rollkörper in den Lageröffnungen der Seitenwänden. Der Begriff Einsenkung soll nicht so verstanden werden, dass mit dem Begriff ein bestimmtes Herstellungsverfahren zur Herstellung der Lageröffnungen beschrieben wird. Vielmehr können die Einsenkungen auf beliebige Art hergestellt werden, z.B. durch Stanzen der Einsenkungen vor einem Profilierungsschritt des Profils. Derart gestaltete Lageröffnungen können zum freien Rand der jeweiligen Seitenwand hin eine Öffnung aufweisen, mithin nach oben offen sein. Die Rollkörper können gemeinsam mit ihren Drehachsen von oben her durch Absenken in die Lageröffnungen eingesetzt werden. Es ist nicht erforderlich, die Drehachsen der Rollkörper bei der Montage exakt über den Lageröffnungen zu positionieren, also z.B. in radialer Richtung der Achsen gegenüber den Lageröffnungen in Fluchtung zu bringen, wodurch sich eine insgesamt montagefreundliche Rollbahn ergibt, deren Rollkörper zügig an der Profilschiene montiert werden können.

Eine Ausgestaltung der Rollbahnen sieht vor, dass der Abstand der freien Enden der Seitenwände kleiner ist als die Breite des Bodens. Dabei können im Bereich der Seitenwände in dem der Abstand gemessen wird, Auflageflächen am Grund der Lageröffnungen ausgebildet sein, auf denen die Drehachsen der Rollkörper aufliegen, so dass der Abstand der Auflageflächen kleiner ist als die Breite des Bodens. Durch den geringeren Abstand kann sich eine auf die freien Enden der Seitenwände wirkende Querkraft ergeben, die das nach innen Schwenken der Seitenwände begünstigt.

Eine weitere Ausgestaltung sieht vor, dass die Seitenwände mit dem Boden zumindest abschnittsweise einen Winkel von weniger als 90° einschließen, wodurch sich eine Verkleinerung des Abstandes der Seitenwände gegenüber dem Boden erreichen lässt.

In diesem Zusammenhang wird weiter vorgeschlagen, dass die Seitenwände über ihre gesamte Höhe mit dem Boden einen Winkel von weniger als 90°, vorzugsweise im Bereich von 85°, einschließen. Die Seitenwände dieser Ausgestaltung bilden lange Federschenkel mit einem entsprechend günstigen Federverhalten.

Gemäß einer weiteren Ausgestaltung wird vorgeschlagen, dass an der Profilschiene Sicherungsmittel vorgesehen sind, welche bevorzugt als einstückige Abkantungen der Seitenwände ausgebildet sind, wobei die Sicherungsmittel einen Abschnitt aufweisen, der den freien Enden der Drehachsen gegenübersteht. Dieser Abschnitt blockiert ein axiales Herausrutschen der Drehachsen aus den Lageröffnungen der Seitenwände, ohne zusätzliche Anbauteile montieren zu müssen.

Ferner wird vorgeschlagen, dass die Profilschiene so ausgebildet ist, dass sich bei einer Schwenkbewegung der Seitenwände die Abschnitte gegen die freien Enden der Drehachsen anlegen, wodurch beim Einfedern der Seitenwände unter Belastung eine Lagesicherung der Drehachsen erreicht wird. Dabei kann die Rollbahn derart gestaltet sein, dass im montierten Zustand der Rollbahn ein Spiel zwischen den Abschnitten und den freien Enden der Drehachsen besteht, dass sich unter Last verringern kann bis die Abschnitte zum Anliegen an den freien Enden der Drehachsen kommen. Bei einer anderen Gestaltung können die Abschnitten im montierten Zustand elastisch vorgespannt an den freien Enden der Drehachsen anliegen, wobei sich die Vorspannkraft unter Last erhöht.

Eine weitere Ausgestaltung sieht dabei vor, dass in der Anlagestellung der Abschnitte der Abstand zwischen den Seitenwänden größer als die Breite der Rollkörper ist. Hierdurch kann vermieden werden, dass die Seitenwände beim nach Innen schwenken die Rollkörper zwischen sich einklemmen und auf diese Weise deren Drehbewegungen abbremsen oder blockieren.

Weiter wird vorgeschlagen, dass die Breite der Lageröffnung im Bereich des freien Endes der Seitenwand größer als der Durchmesser der Drehachse ist. Durch eine solche Breite bzw. Erstreckung der Lageröffnungen in Richtung der Profilschiene ergibt sich eine weitere Vereinfachung der Montage, da die Positionierung der Drehachse über der Lageröffnung in Längsrichtung der Profilschiene innerhalb eines größeren Bereichs erfolgen kann. Die Breite der Lageröffnung im Bereich des freien Endes kann größer als der 1,2-fache Betrag des korrespondierenden Achsdurchmessers bemessen sein.

Eine weitere Ausgestaltung sieht vor, dass die Lageröffnung in Richtung des Bodens schmaler wird. Dabei kann die Lageröffnung in Richtung des Bodens schmaler ausgebildet ist als im Bereich des freien Endes der Seitenwand. Die Lageröffnung kann im Bereich des Bodens eine Breite aufweisen, welche im Wesentlichen dem Durchmesser der Drehachse entspricht.

Durch diese Ausgestaltung kann ein gewisser Selbstzentrierungseffekt erreicht werden, wonach die über der oben breiteren Lageröffnung abgesetzte Drehachse sich innerhalb der in Richtung des Bodens trichterförmig zusammenlaufenden Lageröffnung selbst zentriert. Auch dies vereinfacht die Montage.

Weiter wird vorgeschlagen, dass die Lageröffnung eine Einführschräge und/oder eine im Wesentlichen dem Durchmesser der Drehachse entsprechende Lageschale aufweist. Die Drehachse kann über der Lagerschale direkt oder der Einführschräge abgesetzt werden. Durch die nach unten schräg abfallende, rampenförmige Einführschräge rutscht die Drehachse in die Lagerschale, ohne dass hierzu eine exakte Ausrichtung gegenüber der Lagerschale erforderlich wäre. Die Lagerschale kann derart ausgebildet sein, dass die Drehachse in der Lagerschale gegen ein Hin und Herbewegen in Längsrichtung der Profilschiene fixiert ist. Die Lageschale kann als Bodenbereich einer Ausstanzung gestaltet sein, durch welche die Lageröffnung gebildet ist.

Gemäß einer weiteren Ausführung weisen zwei sich gegenüberliegende Lageröffnungen eine Öffnungsweite auf, die kleiner als die Länge der Drehachse ist. Dabei kann die Öffnungsweite in Längsrichtung der Drehachse im entspannten Zustand der Profilschiene mit oder ohne eingesetzte Rollen und/oder im montierten, mit Rollen bestückten Zustand gemessen werden. Bei dieser Ausgestaltung ist es nicht möglich, die Drehachse ohne eine vorherige Spreizung der Seitenwände in die Lageröffnungen einzusetzen. Erst nachdem die Seitenwände derart gespreizt sind, dass die Öffnungsweite der Länge der Drehachse entspricht, kann die Drehachse von oben her in den Lageröffnungen abgelegt werden, wonach dann die Spreizung der Seitenwände aufgehoben werden kann. Auf diese Weise kann eine Lagesicherung der Drehachse nicht nur in axialer, sondern auch in radial nach außen weisender Richtung erreicht werden. Dabei kann die Öffnungsweite derart bemessen sein, dass die Profilschiene nur um ein geringes Maß aufgeweitet werden muss, um die Drehachsen einsetzen zu können.

Gemäß einer weiteren Ausführung wird schließlich vorgeschlagen, dass die Stirnseiten der Rollkörper kegelstumpfförmig ausgebildet sind. Die Kegelstumpfform führt dazu, dass nur geringe Flächenanteile der Rollkörperstirnseiten in Anlage mit den Seitenwänden kommen können, wodurch sich eine geringe Reibung zwischen den Rollkörpern und den Seitenwänden ergibt.

Weitere Abwandlungen der Rollbahn ergeben sich aus den nachstehend in Bezug auf das Verfahren gemachten Ausführungen.

Ein zweiter Aspekt der Erfindung betrifft ein Herstellungsverfahren einer Rollbahn zum Transport von Lagergütern mit den Schritten Bereitstellen mehrerer Rollkörper mit Drehachsen, Bereitstellen einer Profilschiene, welche einen Boden und zwei gegenüber dem Boden abgewinkelt verlaufende Seitenwände aufweist, wobei die Seitenwände so ausgebildet sind, dass sie unter dem Einfluss einer in Richtung des Bodens gerichteten Kraft dazu neigen, aufeinander zu zu schwenken, wobei die Seitenwände Lageröffnungen und Mittel zur Lagesicherung der Drehachsen in den Lageröffnungen aufweisen, und Einsetzen der Drehachsen in Lageröffnungen der Seitenwände, wobei die Rollkörper gemeinsam mit den Drehachsen von oberhalb der Lageröffnungen in einer nach unten in Richtung des Bodens der Profilschiene weisenden Einsetzrichtung in die Lageröffnungen eingesetzt werden.

Das Einsetzen der Rollkörper gemeinsam mit den Drehachsen in Richtung der Seitenwände vereinfacht die Anordnung der Rollkörper an der Profilschiene. Es ist nicht erforderlich, die freien Enden der Drehachsen gegenüber quer zu den Seitenwänden verlaufenden Lageröffnungen in einer axialen Fluchtung zu halten. Bei der Montage reicht es aus, die Rollkörper mit den entsprechenden Drehachsen oberhalb der Lageröffnungen auszurichten und diese von dort in die Montagestellung abzusenken.

Eine Ausgestaltung des Verfahrens sieht vor, dass die Öffnungsweite der einander gegenüberliegenden Lageröffnungen vor dem Schritt des Einsetzens der Drehachsen durch Spreizen der Seitenwände vorübergehend vergrößert wird und bei dem die Öffnungsweite der einander gegenüberliegenden Lageröffnungen nach dem Schritt des Einsetzens der Drehachsen in die Lageröffnungen wieder verkleinert wird. Auf diese Weise kann eine Lagesicherung der Drehachse auch in nach radial außen weisender Richtung erreicht werden. Ein Spreizen kann durch eine Spreizvorrichtung erfolgen, welche im Innenbereich der Profilschiene an den Schenkeln angreift und diese auseinander drückt. Ferner ist denkbar, dass die Spreizvorrichtung außen an den Abschnitten angreift und die Schenkel an über an den Abschnitten angreifenden Spreizkräften auseinanderzieht. Durch letztere Gestaltung kann der Innenbereich der Profilschiene freigehalten werden, so dass ausreichend Platz für das Einsetzten der Rollen bereitgestellt wird.

Bei einem derartigen Verfahren kann das Spreizen der Seitenwände in einem in Längsrichtung der Profilschiene örtlich begrenzten Bereich erfolgen, wobei nachfolgend die Rollen in diesem Bereich eingesetzt werden können. So können bereits eingesetzte Rollen in einem in Produktionsrichtung hinter diesem örtlich begrenzten Bereich liegenden Bereich durch ein Rückfedern der Schenkel der Profilschiene in ihrer eingesetzten Position fixiert werden.

Ferner kann bei einem solchen Verfahren, das Verfahren ferner einen Lageröffnungsanbringungsschritt aufweisen, über den die Lageröffnungen in einem unprofilierten oder in einem bereits profilierten Blech erzeugt werden. Der Lageröffnungsanbringungsschritt kann z.B. einen Stanzschritt umfassen. Denkbar sind auch andere Herstellungsverfahren der Lageröffnung.

Ferner kann bei einem derartigen Verfahren, ein Profilierungsschritt vorgesehen sein, der dem Einsetzen der Rollen vorangehen kann. Dabei kann z.B. einem Blech die in Bezug auf den ersten oder zweiten Aspekt der Erfindung beschriebene Querschnittsform gegeben werden.

Bei einem derartigen Verfahren kann eine Taktung der Anbringung der einzelnen Lageröffnungen und eine Taktung der Einsetzung der einzelnen Rollen in die Lageröffnungen erfolgen, wobei die Taktung der Anbringung der einzelnen Lageröffnungen und die Taktung der Einsetzung der einzelnen Rollen in Abhängigkeit voneinander erfolgen kann. Dabei kann die Taktung der Einsetzung der einzelnen Rollen in Abhängigkeit von der Taktung der Anbringung der einzelnen Lageröffnungen gesteuert werden. Dabei kann die Taktung der Anbringung der einzelnen Lageröffnungen z.B. über Sensoren detektiert werden und die Taktung der Einsetzung der einzelnen Rollen kann in Abhängigkeit von dem detektierten Wert bewirkt werden. Durch eine derartige Steuerung kann eine hohe Produktionsgeschwindigkeit erzielt werden.

Derartige Verfahren können als kontinuierliche Verfahren gestaltet sein. Dabei können entlang einer Produktionsstraße zuerst Stanzschritte vorgenommen werden, mittels der Lageröffnungen in Blech gestanzt werden können, das z.B. von einer Blechrolle abläuft, nachfolgend kann das Blech über den Profilierungsschritt in die gewünschte Profilform gebracht werden, wonach das Profil aufgespreizt werden kann, wonach die Rollen eingesetzt werden können. Ein Profilierungsschritt kann ein Kaltumformungsschritt, z.B. durch Kaltwalzen, sein.

Weitere Abwandlungen des Herstellungsverfahrens ergeben sich aus den vorstehend in Bezug auf die Rollbahn gemachten Ausführungen.

Ein dritter Aspekt betrifft ein Verfahren zur Herstellung einer Rollbahn zum Transport von Lagergütern mit den Schritten Bestimmen unterschiedlicher Rollkörperabstände für die herzustellende Rollbahn, Herstellen einer Profilschiene (1) mit Lageröffnungen (4), welche in Längsrichtung der Profilschiene (1) unterschiedliche Abstände (a, b, c) zueinander aufweisen, welche den bestimmten Rollkörperabständen entsprechen, Bereitstellen mehrerer Rollkörper (2) mit Drehachsen (3), Einsetzen der Drehachsen (3) in die Lageröffnungen (4). Der Schritt des Bestimmens unterschiedlicher Rollkörperabstände kann z.B. entsprechend vorgegebener Einsatzbedingungen der herzustellenden Rollbahn im Gebrauch erfolgen. Der Schritt des Bestimmens kann somit Teil eines Planungsvorgangs einer gesamten Förderstrecke sein. Die Herstellung einzelner Rollbahnen für eine Förderstrecke kann dem folgend individuell erfolgen, so dass Rollbahnen mit individuellen, unterschiedlichen Rollenabständen bereitgestellt werden können. Dabei ist es möglich jeden einzelnen Abstand einer Rolle zur nächsten individuell zu bestimmen und die Rollenbahn entsprechend herzustellen.

Dabei kann ein solches Verfahren ferner Verfahrensschritte umfassen, wie sie in Bezug auf den zweiten Aspekt beschrieben wurden. Z.B. kann die Herstellung unterschiedlicher Rollbahnen nacheinander in einem kontinuierlichen Verfahren erfolgen. Außerdem kann ein solches Verfahren Verfahrensschritte umfassen, wie sie sich aus der nachfolgenden Beschreibung einer Produktionsstraße entsprechend einem vierten Aspekt ergeben.

Ein vierter Aspekt betrifft eine Produktionsstraße zur Herstellung einer in Bezug auf den ersten Aspekt beschriebenen Rollbahn unter Anwendung eines in Bezug auf den zweiten Aspekt und/oder dritten Aspekt beschriebenen Verfahrens.

Eine solche Produktionsstraße kann eine Stanzvorrichtung zum Ausstanzen der Lageröffnungen und eine Profilgebungsmaschine zum Umformen eines metallischen Bandmaterials umfassen.

Eine solche Produktionsstraße kann ferner ein Richtwerk zum Geraderichten eines metallischen Bandmaterials und/oder eine Bestückungsvorrichtung zum Einsetzen der Rollen in die Lageröffnungen und/oder eine Ablängungsvorrichtung zum Ablängen der bestückten Rollenbahnen umfassen.

Eine Ausführungsform einer solchen Produktionsstraße kann z.B. eine Produktionsstraße sein, bei der von einem Blech-Coil kontinuierlich Blech abgerollt wird, das in der nächsten Station im Richtwerk gerichtet wird, anschließend in eine Stanzvorrichtung einläuft, in der Lageröffnungen in einem Abstand zur benachbarten Lageröffnung, der bestimmten Vorgaben entsprechend von Lageröffnung zu Lageröffnung variieren kann, gestanzt werden, die anschließend in die Profilierungsmaschine einläuft, in der das Blech so umgeformt werden kann, dass es ein entsprechendes im Wesentlichen U-förmiges Profil erhält, wobei bei der Produktionsstraße nach der Profilierungsmaschine eine Bestückungsvorrichtung angeordnet ist, in die das fertigprofilierte Profil einläuft, in der Rollen mit Drehachsen von oben in die Lageröffnungen eingesetzt werden, und wobei nachfolgend eine Ablängvorrichtung vorgesehen ist, in der die fertig bestückten Profile abgelängt werden.

Im Folgenden werden bevorzugte Ausführungsformen der Erfindung beispielhaft beschrieben. Dabei weisen die beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart werden, die nicht alle Merkmale der im Folgenden beschriebenen Ausführungsformen aufweisen. Genauso ist es denkbar, Merkmale, die in Bezug auf unterschiedliche Ausführungsformen beschrieben werden, einzeln miteinander zu kombinieren. In den beigefügten Zeichnungen zeigt:
- Fig. 1: eine perspektivische Teilansicht einer Rollbahn,
- Fig. 2: eine seitliche Ansicht der Rollbahn nach Fig. 1,
- Fig. 3: eine Draufsicht der Rollbahn nach Fig. 1,
- Fig. 4: eine Ansicht der Rollbahn aus der in Fig. 2 mit IV bezeichneten Richtung,
- Fig. 5: einige Teile der Rollbahn in perspektivischer Ansicht,
- Fig. 6: eine Schnittansicht gemäß der in Fig. 2 mit VI-VI bezeichneten Schnittlinie, wobei die Rollbahn im lastfreien Zustand dargestellt ist,
- Fig. 7a: eine der Fig. 6 entsprechende Schnittdarstellung der Rollbahn in belastetem Zustand,
- Fig. 7b: eine Schnittdarstellung einer Rollbahn mit einem weiteren alternativen Profilquerschnitt in belastetem Zustand,
- Fig. 8: eine seitliche Ansicht auf einen Teilbereich der Rollbahn, zur Veranschaulichung der Montage eines Rollkörper an der Profilschiene und
- Fig. 9: in schaltplanmäßiger Darstellung eine Übersicht des Herstellungsverfahrens zur Herstellung einer erfindungsgemäßen Rollbahn.

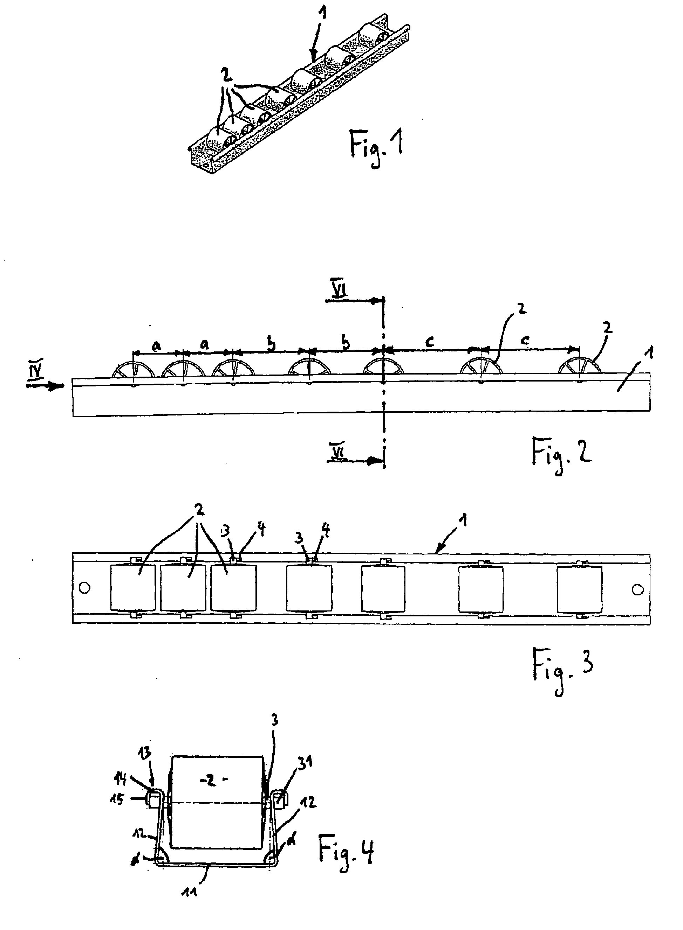

In Fig. 1 dargestellt ist in perspektivischer Ansicht eine Rollbahn, die aus einer kanalförmigen Profilschiene 1 und mehreren, in Richtung der Profilschiene 1 hintereinander angeordneten Rollkörpern 2 besteht, die über in Fig. 1 nicht zu erkennende Drehachsen drehbar gelagert sind.

Die Rollkörper 2 weisen über die Länge der Profilschiene 1 betrachtet verschiedene Abstände auf, vgl. Fig. 2. Im Bereich der Beschickungsseite, d.h. der Seite, an welcher die Lagergüter aufgenommen werden, sind die Rollkörper 2 verdichtet, d.h. die Abstände a sind dichter als die Abstände b, die wiederum dichter als die sich anschließenden Abstände c sind. Auch im Entnahmebereich und in sonstigen Abschnitten der Rollbahn, an denen das Lagergut längere Zeit verweilt, kann die Rollendichte erhöht werden.

Gemäß den Darstellungen in den Figuren 3 und 4 weist die Profilschiene 1 einen ebenen Boden 11 und zwei von diesem nach oben abgewinkelt verlaufende Seitenwände 12 auf. Bei der Profilschiene 1 handelt es sich um ein Blechformteil, das z.B. durch mehrfaches Biegen, Abkanten, Tiefziehen oder Kombinationen dieser und anderer bekannter Verfahren der Blechformgebung hergestellt ist.

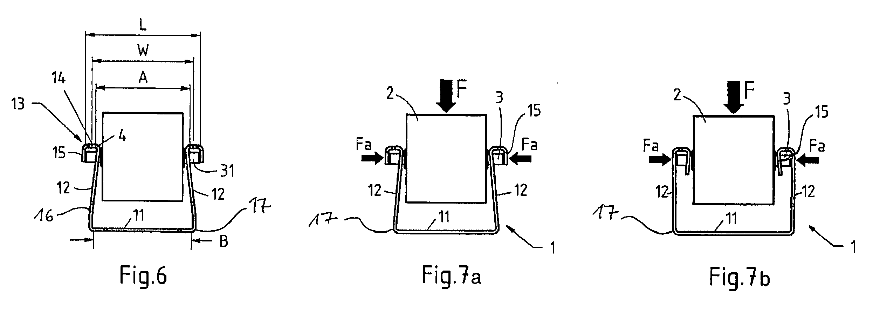

Die Seitenwände 12 des Profils 1 weisen an ihren oberen Enden Lageröffnungen 4 auf, in denen quer zur Schiene 1 die Drehachsen 3 der Rollkörper 2 angeordnet sind. Die Seitenwände 12 können so gestaltet sein, dass sie sich nicht im rechten Winkel gegenüber dem Boden 11 erstrecken, sondern leicht nach innen geneigt sind. Bei dem in Fig. 7a dargestellten Ausführungsbeispiel beträgt der Neigungswinkel α in etwa 85°. Die Seitenwände verlaufen in dieser Ausführungsform im wesentlichen eben und sind direkt in Bodennähe abgekanntet. In der in Fig. 6 gezeigten Ausführungsform weisen die Seitenwände 12 zwischen dem Boden 11 und dem oberen Bereich einen Knick 16 in Längsrichtung auf. Dabei verlaufen Die Seitenwände 12 vom Boden 11 ausgehend zunächst im Wesentlichen rechtwinkelig nach oben und sind erst in einem Abstand oberhalb des Bodens nach innen abgekantet. Bei beiden Ausführungsformen ist der Abstand A zwischen den freien Enden der Seitenwände 12 kleiner als die Breite B des Bodens 11, vgl. Fig. 6. Dies hat zur Folge, dass bei Auflage eines schweren Lagerguts bzw. einer in Richtung des Bodens 11 wirkenden Kraft F eine gewisse Querkraftkomponente F_{Q} erzeugt wird, die dazu führt, dass die freien Enden der Seitenwände 12 gemäß der Darstellung in Fig. 7a in Richtung der Pfeile Fa aufeinander zu schwenken. Die kanalförmige Profilschiene 1 neigt unter Last dazu, die Profilöffnung zu schließen.

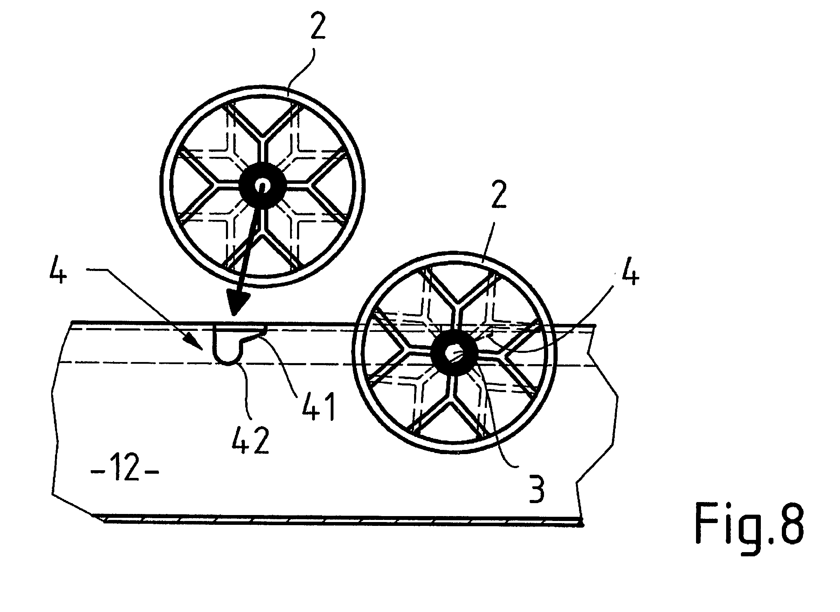

In Fig. 7b wird eine weiter Ausführungsform eines Profils dargestellt, bei dem die Seitenwände 12 vom Boden ausgehen rechtwinkelig abgewinkelt nach oben verlaufen. Oberhalb der Achsen 3 verlaufen Abschnitte der Seitenwände jeweils in Richtung der Mitte der Profilschiene. Ein weiterer Abschnitt 15 schließt sich jeweils nach unten verlaufend an. Die Lageröffnungen 4 sind an diesen letzten Abschnitten angeordnet. Die Lageröffnungen können wie in Fig. 8 dargestellt gestaltet sein, wonach der obere Bereich der Lageröffnung 4 eine Einführschräge 41 aufweist und in Richtung einer tiefer gelegenen Lagerschale 42 geneigt verläuft. Die Drehachse 3 kommt auf beiden Seiten der Profilschiene 1 in einer Lagerschale 42 zu liegen. Da die Lagerschalen in Bezug auf die Knickstelle 17, die zwischen jeder der Seitenwände 12 und dem Boden 11 gebildet wird, zur Mitte der Profilschiene hin verlagert angeordnet ist, wird bei einer Belastung der Rolle durch eine Kraft F auch hier ein Kippmoment auf die Seitenwände 12 ausgeübt, das dazu führt, dass die Seitenwände 12 bei Belastung dazu neigen, sich aufeinander zu zu schwenken.

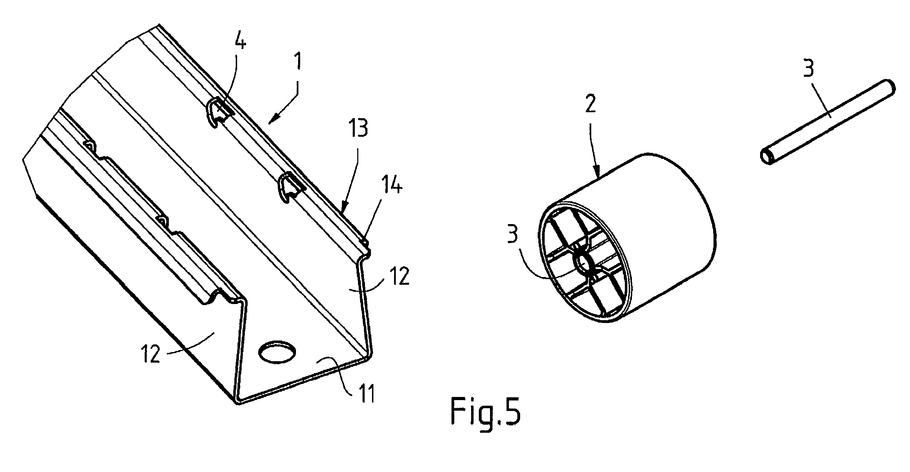

In Fig. 5 ist in perspektivischer Darstellung links die Ausgestaltung der in der Seitenwand 12 vorgesehenen Lageröffnung 4 zu erkennen. Die Öffnung 4 erstreckt sich von oben her in das Material der Seitenwand 12. Die Lageröffnung 4 ist insgesamt nach Art einer Einsenkung ausgebildet, die sich vom oberen freien Rand der Seitenwand 12 in der Ebene der Seitenwand 12 in Richtung des Bodens 11 erstreckt. Die mit der Drehachse 3 versehene Rolle 2 kann daher von oben, d.h. im Wesentlichen in Richtung der Seitenwände 12 in die Öffnung 4 abgesenkt und dort aufgenommen werden.

Die Lageröffnung 4 weist eine Geometrie auf, die ein einfaches Einlegen des Rollkörpers 2 und der Drehachse 3 von oben her erlaubt. Im Bereich des freien Randes der Seitenwand 12 ist die Breite der Lageröffnung 4, d.h. deren Erstreckung in Richtung der Profilschiene 1, größer als in dem weiter unten liegenden, schalenförmigen Bereich. Der obere Bereich der Lageröffnung 4 weist eine Einführschräge 41 auf, die in Richtung einer tiefer gelegenen Lagerschale 42 geneigt verläuft. Der Durchmesser der Lagerschale 42 entspricht im Wesentlichen dem Durchmesser der Drehachse 3, mit einem gewissen Übermaß, um ein verkantungsfreies Hineinrutschen der Drehachse 3 zu erreichen. Die Einführschräge 41 ist von insgesamt rampenförmig geneigter Geometrie und bildet eine Art Einführtrichter für die Drehachse 3. Die in Fig. 8 rechts dargestellte Rolle 2 ist in der Endlage dargestellt, in welcher die Drehachse 3 ihre Position innerhalb der der Lagerschale 42 der Öffnung 4 eingenommen hat.

In dieser Endlage ist die Drehachse 3 über ein Sicherungsmittel 13 lagegesichert. Einzelheiten der Lagesicherung sind in den Fig. 6 und 7, die das Profil der Profilschiene 1 einerseits im entlasteten und andererseits im belasteten Zustand zeigen, zu erkennen.

Als Sicherungsmittel 13 dient eine doppelte Abkantung im Bereich des oberen Endes der Seitenwand 12, die aus zwei Abschnitten 14, 15 besteht. Der eine Abschnitt 14 erstreckt sich im Wesentlichen in Richtung der Drehachse 3, wohingegen der weitere Abschnitt 15 quer zur Achsrichtung der Drehachse 3 verläuft und dem freien Ende der Drehachse 3 stirnseitig gegenübersteht. Wie die Darstellung in Fig. 6 erkennen lässt, ist im unbelasteten Zustand der Rollbahn ein gewisser Spalt zwischen der Innenfläche des Abschnitts 15 und der Stirnfläche der Drehachse 3 vorhanden, weshalb die Achse 3 innerhalb der Lageröffnung 4 mit einem gewissen Spiel in axialer Richtung hin und her bewegbar ist. Dieses Spiel ist bei Auflage eines hinreichend schweren Lagerguts nicht mehr vorhanden, wie dies in Fig. 7a dargestellt ist. Durch Einwirkung einer in Richtung des Bodens 11 gerichteten Kraft F stellt sich an den einstückig mit den Seitenwänden 12 verbundenen Abschnitten 15 eine in Richtung des Achskörpers 3 gerichtete Querkraft F_{Q} ein, die dazu führt, dass die freien Enden der Seitenwände 12 aufeinander zu schwenken, bis die Abschnitte 15 mit den stirnseitigen Enden der Drehachse 3 in Anlage gelangen. Der Schwenkweg bzw. die Profilschiene 1 ist dabei so bemessen, dass in der Anlagestellung der Abschnitte 15 an den Enden der Drehachse 3 ein ausreichender Minimalabstand zwischen den beiden Seitenwänden 12 verbleibt, der weiterhin eine Rotation des Rollkörpers 2 erlaubt. Der Rollkörper 2 ist schmaler als dieser Minimalabstand, so dass ein Abbremsen oder Klemmen des Rollkörpers 2 vermieden wird.

Wie sich den Darstellungen in Fig. 6 und 7 weiter entnehmen lässt, weist das Paar der beiden sich gegenüberliegenden Öffnungen 4 eine Öffnungsweise W auf, die geringer ist als die Länge L der Drehachse 3. Bei dieser Ausführung ist es erforderlich, dass die oberen Enden der Seitenwände 12 zunächst durch Spreizen aufgeweitet, d.h. voneinander weggebogen werden müssen, bis die Öffnungsweite W der Achslänge L entspricht, so dass die Drehachse 3 von oben her in die Lageröffnungen 4 einsetzbar ist. Sodann können die Seitenwände 12 in ihre Ausgangsstellung zurückfedern, wodurch sich neben der axialen Sicherung durch die Abschnitte 15 auch in radial nach oben weisender Richtung der Drehachse 3 über die Abschnitte 14 eine Lagesicherung erreicht wird. Die Profilschiene gemäß der Ausführung in den Fign. 6 und 7 ist so dimensioniert, dass die Öffnungsweite W dann der Achslänge L der Drehachse 3 entspricht, wenn die Seitenwände 12 mit dem Boden 11 einen Winkel von 90° einschließen.

Gemäß der Darstellung in Fig. 5 reicht die Lageröffnung 4 nur teilweise in den annähernd parallel zum Boden 11 ausgerichteten Abschnitt 14 der Sicherungsabkantung 13 hinein. Nach dem Rückfedern der Seitenwände 12 wird die Radialsicherung über den Bereich des Abschnitts 14 erreicht, in den die Öffnung 14 nicht hereinreicht.

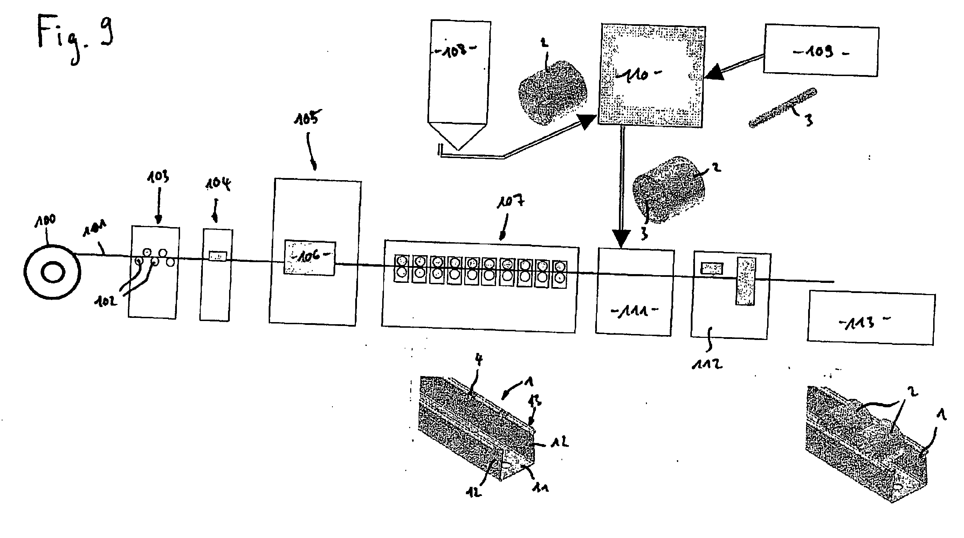

In Fig. 9 ist schließlich eine Ausführungsform einer Produktionsstraße dargestellt, die zur Ausführung eines ein möglichen Herstellungsverfahren zur Herstellung einer erfindungsgemäßen Rollbahn geignet ist. Im unteren Bereich ist zunächst die Herstellung der Profilschiene 1 und im oberen Bereich die Herstellung des Rollkörpers 2 sowie dessen Bestückung mit der Drehachse 3 dargestellt, wonach die Anordnung der Rollen 2 an der Profilschiene 1 erfolgt.

Die Herstellung der Profilschiene erfolgt ausgehend aus einem auf einer Rolle 100 aufgewickelten, metallischen Bandmaterial 101, welches abgewickelt und im Anschluss durch ein mehrere Rollen 102 aufweisendes, das Bandmaterial glättendes Richtwerk 103 sowie eine Vorrichtung 104 zu einer Stanzvorrichtung 105 geführt wird, deren Presswerkzeug 106 die Lageröffnungen 4 aus dem bandförmigen Material 101 herausstanzt. Die Lageröffnungen können entsprechend den Anforderungen an die fertige Rollbahn, die dem Einsatzzweck und -Ort der fertigen Rollbahn entsprechen, automatisiert in unterschiedlichen Abständen zueinander angebracht werden. Im Anschluss wird in einer Profilgebungsmaschine 107 der kanalförmige Querschnitt der Profilschiene 1 mit den an den freien Enden der Seitenwände 12 vorgesehenen Sicherungsmitteln 13 hergestellt.

Parallel zur Herstellung der Profilschiene 1 läuft die Herstellung der aus einem Kunststoffmaterial, beispielsweise durch Spritzguss oder Strangpressen hergestellten Rollen 2 in einer entsprechenden Vorrichtung 108. In einer weiteren Maschine 109 werden die bolzenförmigen Drehachsen 3 hergestellt und im Anschluss in einer Bestückungsmaschine 110 in die Rollkörper 2 eingesteckt. Danach werden die Rollkörper 2 gemeinsam mit den Drehachsen 3 in einer Bestückungsvorrichtung 111 in die Lageröffnungen 4 des Profils 1 eingesetzt, wie dies zuvor ausführlich beschrieben wurde. Anschließend folgt in einer weiteren Ablängungsvorrichtung 112 eine Markierung und anschließend Ablängung der Profilschienen, wonach diese gemäß einem letzten Verfahrensschritt mittels geeigneter Transportvorrichtungen 113 abtransportiert werden.

### Bezugszeichenliste

- 1: Profilschiene
- 2: Rollkörper
- 3: Drehachse
- 4: Lageröffnung
- 11: Boden
- 12: Seitenwand
- 13: Sicherungsmittel, Abkantung
- 14: Abschnitt
- 15: Abschnitt
- 16: Knick
- 17: Knickstelle
- 31: Freies Ende
- 41: Einführschräge
- 42: Lagerschale
- 100: Rolle
- 101: Bandmaterial
- 102: Rolle
- 103: Richtwerk
- 104: Abzweigvorrichtung
- 105: Stanzvorrichtung
- 106: Presswerkzeug
- 107: Profilgebungsmaschine
- 108: Vorrichtung
- 109: Maschine
- 110: Bestückungsvorrichtung
- 111: Bestückungsvorrichtung
- 112: Ablängungsvorrichtung
- 113: Transportvorrichtung

- A: Abstand
- B: Breite
- W: Öffnungsweite
- L: Länge
- F: Kraft
- F_{Q}: Schwerkraft
- a: Abstand
- b: Abstand
- c: Abstand
- α: Winkel

## Patentansprüche

1. Rollbahn zum Transport von Lagergütern mit
- einer Profilschiene (1), welche einen Boden (11) und zwei gegenüber dem Boden (11) abgewinkelt verlaufende Seitenwände (12) aufweist, wobei die Seitenwände (12) so ausgebildet sind, dass sie unter dem Einfluss einer in Richtung des Bodens (11) gerichteten Kraft dazu neigen, aufeinander zu zu schwenken,
- mehreren Rollkörpern (2), die über Drehachsen (3) drehbar in Lageröffnungen (4) der Seitenwände (12) gelagert sind,
- und Mitteln (13) zur Lagesicherung der Drehachsen (3) in den Lageröffnungen (4),
wobei,
die Lageröffnungen (4) als sich vom freien Ende der Seitenwände (12) in Richtung des Bodens (12) erstreckende Einsenkungen ausgebildet sind.

2. Rollbahn nach Anspruch 1, bei welcher der Abstand (A) der freien Enden der Seitenwände (12) kleiner ist, als die Breite (B) des Bodens (11).

3. Rollbahn nach Anspruch 1 oder Anspruch 2, bei welcher die Seitenwände (12) mit dem Boden (11) zumindest abschnittsweise einen Winkel (a) von weniger als 90° einschließen.

4. Rollbahn nach Anspruch 3, bei welcher die Seitenwände (12) über ihre gesamte Höhe mit dem Boden (11) einen Winkel (a) von weniger als 90°, vorzugsweise 85°, einschließen.

5. Rollbahn nach einem der vorhergehenden Ansprüche, bei welcher Sicherungsmittel (13) vorgesehen sind, welche bevorzugt als einstückige Abkantungen der Seitenwände (12) ausgebildet sind, wobei die Sicherungsmittel (13) einen Abschnitt (14) aufweisen, der den freien Enden (31) der Drehachsen (3) gegenübersteht.

6. Rollbahn nach Anspruch 5, bei der die Profilschiene (1) so ausgebildet ist, dass sie sich bei einer Schwenkbewegung der Seitenwände (12) die Abschnitte (14) gegen die freien Enden (31) der Drehachsen (3) anlegen.

7. Rollbahn nach einem der vorstehenden Ansprüche, bei welcher die Breite der Lageröffnung (4) im Bereich des freien Endes der Seitenwand (12) größer als der Durchmesser der Drehachse (3) ist, und/oder wobei die Lageröffnung (4) in Richtung des Bodens (11) schmaler ausgebildet ist als im Bereich des freien Endes der Seitenwand (12).

8. Rollbahn nach Anspruch 7, bei welcher die Lageröffnung (4) eine Einführschräge (41) und eine im Wesentlichen dem Durchmesser der Drehachse (3) entsprechende Lagerschale (42) aufweist.

9. Rollbahn nach einem der vorhergehenden Ansprüche, bei welcher zwei sich gegenüberliegende Lageröffnungen (4) eine Öffnungsweite (W) aufweisen, die kleiner als die Länge (L) der Drehachse (3) ist.

10. Verfahren zur Herstellung einer Rollbahn zum Transport von Lagergütern mit den Schritten:
- Bereitstellen mehrerer Rollkörper (2) mit Drehachsen (3),
- Bereitstellen einer Profilschiene (1), welche einen Boden (11) und zwei gegenüber dem Boden (11) abgewinkelt verlaufende Seitenwände (12) aufweist, wobei die Seitenwände (12) so ausgebildet sind, dass sie unter dem Einfluss einer in Richtung des Bodens (11) gerichteten Kraft dazu neigen, aufeinander zu zu schwenken, wobei die Seitenwände (12) Lageröffnungen (4) und Mittel (13) zur Lagesicherung der Drehachsen (3) in den Lageröffnungen (4) aufweisen,
- Einsetzen der Drehachsen (3) in Lageröffnungen (4) der Seitenwände (12),
wobei die Rollkörper (2) gemeinsam mit den Drehachsen (3) von oberhalb der Lageröffnungen (4) in einer nach unten in Richtung des Bodens der Profilschiene weisenden Einsetzrichtung in die Lageröffnungen (4) eingesetzt werden.

11. Verfahren nach Anspruch 10, bei welchem die Öffnungsweite (W) der einander gegenüberliegenden Lageröffnungen (4) vor dem Schritt des Einsetzens der Drehachsen durch Spreizen der Seitenwände (12) vorübergehend vergrößert wird und bei dem die Öffnungsweite (W) der einander gegenüberliegenden Lageröffnungen (4) nach dem Schritt des Einsetzens der Drehachsen in die Lageröffnungen wieder verkleinert wird.

12. Verfahren nach Anspruch 11, wobei das Spreizen der Seitenwände (12) in einem in Längsrichtung der Profilschiene örtlich begrenzten Bereich erfolgt, in dem die Rollen eingesetzt werden.

13. Verfahren nach einem der Ansprüche 10 bis 12, wobei das Verfahren ferner ein Lageröffnungsanbringungsschritt aufweist, über den die Lageröffnungen (4) in einem unprofilierten oder bereits profilierten Blech erzeugt werden.

14. Verfahren nach einem der Ansprüche 10 bis 13, wobei das Verfahren ferner einen Profilierungsschritt aufweist, der dem Einsetzen der Rollen vorangeht.

15. Verfahren nach einem der Ansprüche 13 und 14, wobei eine Taktung der Anbringung der einzelnen Lageröffnungen erfolgt, bei dem eine Taktung der Einsetzung der einzelnen Rollen in die Lageröffnungen erfolgt und bei dem die Taktung der Anbringung der einzelnen Lageröffnungen und die Taktung der Einsetzung der einzelnen Rollen in Abhängigkeit voneinander erfolgt.

16. Verfahren zur Herstellung einer Rollbahn zum Transport von Lagergütern mit den Schritten:
- Bestimmen unterschiedlicher Rollkörperabstände für die herzustellende Rollbahn,
- Herstellen einer Profilschiene (1) mit Lageröffnungen (4), welche in Längsrichtung der Profilschiene (1) unterschiedliche Abstände (a, b, c) zueinander aufweisen, welche den bestimmten Rollkörperabständen entsprechen,
- Bereitstellen mehrerer Rollkörper (2) mit Drehachsen (3),
- Einsetzen der Drehachsen (3) in die Lageröffnungen (4).

17. Verfahren nach Anspruch 16, welches ferner einzelne Verfahrensschritte eines der Ansprüche 10 bis 15 umfasst.

18. Produktionsstraße zur Herstellung einer Rollbahn nach einem der Ansprüche 1 bis 9 unter Anwendung eines Verfahrens nach einem der Ansprüche 10 bis 17.

19. Produktionsstraße nach Anspruch 18 umfassend eine Stanzvorrichtung 105 zum Ausstanzen der Lageröffnungen 4 und eine Profilgebungsmaschine 107 zum Umformen eins metallischen Bandmaterials 101,

20. Produktionsstraße nach Anspruch 19, ferner umfassend ein Richtwerk 103 zum Geraderichten eines metallischen Bandmaterials 101, und/oder eine Bestückungsvorrichtung 111 zum Einsetzen der Rollen in die Lageröffnungen 4 und/oder eine Ablängungsvorrichtung 112 zum Ablängen der bestückten Rollenbahnen 1.

## Geänderte Patentansprüche

### Geänderte Patentansprüche gemäss Regel 137(2) EPÜ.

**1.** Rollbahn zum Transport von Lagergütern mit
- einer Profilschiene (1), welche einen Boden (11) und zwei gegenüber dem Boden (11) abgewinkelt verlaufende Seitenwände (12) aufweist, wobei die Seitenwände (12) so ausgebildet sind, dass sie unter dem Einfluss einer in Richtung des Bodens (11) gerichteten Kraft dazu neigen, aufeinander zu zu schwenken,
- mehreren Rollkörpern (2), die über Drehachsen (3) drehbar in Lageröffnungen (4) der Seitenwände (12) gelagert sind,
- und Mitteln (13) zur Lagesicherung der Drehachsen (3) in den Lageröffnungen (4),
wobei die Lageröffnungen (4) als sich vom freien Ende der Seitenwände (12) in Richtung des Bodens (12) erstreckende Einsenkungen ausgebildet sind,
wobei bei der Rollbahn die Seitenwände (12) mit dem Boden (11) zumindest abschnittsweise einen Winkel (a) von weniger als 90° einschließen und
bei welcher Sicherungsmittel (13) vorgesehen sind, welche als einstückige Abkantungen der Seitenwände (12) ausgebildet sind, wobei die Sicherungsmittel (13) einen Abschnitt (14) aufweisen, der den freien Enden (31) der Drehachsen (3) gegenübersteht.

**2.** Rollbahn nach Anspruch 1, bei welcher der Abstand (A) der freien Enden der Seitenwände (12) kleiner ist, als die Breite (B) des Bodens (11).

**3.** Rollbahn nach Anspruch 1, bei welcher die Seitenwände (12) über ihre gesamte Höhe mit dem Boden (11) einen Winkel (a) von weniger als 90°, vorzugsweise 85°, einschließen.

**4.** Rollbahn nach Anspruch 1, bei der die Profilschiene (1) so ausgebildet ist, dass sie sich bei einer Schwenkbewegung der Seitenwände (12) die Abschnitte (14) gegen die freien Enden (31) der Drehachsen (3) anlegen.

**5.** Rollbahn nach einem der vorstehenden Ansprüche, bei welcher die Breite der Lageröffnung (4) im Bereich des freien Endes der Seitenwand (12) größer als der Durchmesser der Drehachse (3) ist, und/oder wobei die Lageröffnung (4) in Richtung des Bodens (11) schmaler ausgebildet ist als im Bereich des freien Endes der Seitenwand (12).

**6.** Rollbahn nach Anspruch 5, bei welcher die Lageröffnung (4) eine Einführschräge (41) und eine im Wesentlichen dem Durchmesser der Drehachse (3) entsprechende Lagerschale (42) aufweist.

**7.** Rollbahn nach einem der vorhergehenden Ansprüche, bei welcher zwei sich gegenüberliegende Lageröffnungen (4) eine Öffnungsweite (W) aufweisen, die kleiner als die Länge (L) der Drehachse (3) ist.

**8.** Verfahren zur Herstellung einer Rollbahn zum Transport von Lagergütern mit den Schritten:
- Bereitstellen mehrerer Rollkörper (2) mit Drehachsen (3),
- Bereitstellen einer Profilschiene (1), welche einen Boden (11) und zwei gegenüber dem Boden (11) abgewinkelt verlaufende Seitenwände (12) aufweist, wobei die Seitenwände (12) so ausgebildet sind, dass sie unter dem Einfluss einer in Richtung des Bodens (11) gerichteten Kraft dazu neigen, aufeinander zu zu schwenken, wobei die Seitenwände (12) Lageröffnungen (4) und Mittel (13) zur Lagesicherung der Drehachsen (3) in den Lageröffnungen (4) aufweisen,
- Einsetzen der Drehachsen (3) in Lageröffnungen (4) der Seitenwände (12),
wobei die Rollkörper (2) gemeinsam mit den Drehachsen (3) von oberhalb der Lageröffnungen (4) in einer nach unten in Richtung des Bodens der Profilschiene weisenden Einsetzrichtung in die Lageröffnungen (4) eingesetzt werden,
wobei bei dem Verfahren die Öffnungsweite (W) der einander gegenüberliegenden Lageröffnungen (4) vor dem Schritt des Einsetzens der Drehachsen durch Spreizen der Seitenwände (12) vorübergehend vergrößert, dann die Drehachse (3) von oben her in den Lageröffnungen (4) eingesetzt und dann die Öffnungsweite (W) der einander gegenüberliegenden Lageröffnungen (4) nach dem Schritt des Einsetzens der Drehachsen in die Lageröffnungen wieder verkleinert wird.

**9.** Verfahren nach Anspruch 8, wobei das Spreizen der Seitenwände (12) in einem in Längsrichtung der Profilschiene örtlich begrenzten Bereich erfolgt, in dem die Rollen eingesetzt werden.

**10.** Verfahren nach einem der Ansprüche 8 bis 9, wobei das Verfahren ferner ein Lageröffnungsanbringungsschritt aufweist, über den die Lageröffnungen (4) in einem unprofilierten oder bereits profilierten Blech erzeugt werden.

**11.** Verfahren nach einem der Ansprüche 8 bis 10, wobei das Verfahren ferner einen Profilierungsschritt aufweist, der dem Einsetzen der Rollen vorangeht.

**12.** Verfahren nach einem der Ansprüche 10 und 11, wobei eine Taktung der Anbringung der einzelnen Lageröffnungen erfolgt, bei dem eine Taktung der Einsetzung der einzelnen Rollen in die Lageröffnungen erfolgt und bei dem die Taktung der Anbringung der einzelnen Lageröffnungen und die Taktung der Einsetzung der einzelnen Rollen in Abhängigkeit voneinander erfolgt.

**13.** Verfahren zur Herstellung einer Rollbahn zum Transport von Lagergütern mit den Schritten:
- Bestimmen unterschiedlicher Rollkörperabstände für die herzustellende Rollbahn,
- Herstellen einer Profilschiene (1) mit Lageröffnungen (4), welche in Längsrichtung der Profilschiene (1) unterschiedliche Abstände (a, b, c) zueinander aufweisen, welche den bestimmten Rollkörperabständen entsprechen, wobei die Lageröffnungen in einem kontinuierlichen Verfahren automatisiert entsprechend den vorbestimmten unterschiedlichen Abständen angebracht werden,
- Bereitstellen mehrerer Rollkörper (2) mit Drehachsen (3),
- Einsetzen der Drehachsen (3) in die Lageröffnungen (4).

**14.** Verfahren nach Anspruch 13, welches ferner einzelne Verfahrensschritte eines der Ansprüche 8 bis 12 umfasst.

**15.** Produktionsstraße zur Herstellung einer Rollbahn nach einem der Ansprüche 1 bis 7 unter Anwendung eines Verfahrens nach einem der Ansprüche 8 bis 14.

**16.** Produktionsstraße nach Anspruch 15 umfassend eine Stanzvorrichtung (105) zum Ausstanzen der Lageröffnungen (4) und eine Profilgebungsmaschine (107) zum Umformen eins metallischen Bandmaterials (101).

**17.** Produktionsstraße nach Anspruch 16, ferner umfassend ein Richtwerk (103) zum Geraderichten eines metallischen Bandmaterials (101), und/oder eine Bestückungsvorrichtung (111) zum Einsetzen der Rollen in die Lageröffnungen (4) und/oder eine Ablängungsvorrichtung (112) zum Ablängen der bestückten Rollenbahnen (1).
